# EUROPÄISCHE PATENTANMELDUNG

(11) **EP 4 152 575 A1**
(43) Veröffentlichungstag der Anmeldung: **22.03.2023**
(21) Anmeldenummer: 22188291.3
(22) Anmeldetag: 02.08.2022
(51) Int. Cl.: H02K 5/20, H02K 7/116, H02K 9/19, H02K 9/193

(54) **ELEKTRISCHER ANTRIEB**

(30) Priorität: 17.09.2021 DE 102021210331
(71) Anmelder: Robert Bosch GmbH, 70442 Stuttgart (DE)
(72) Erfinder: Mohamed, Wael, 71665 Vaihingen-Enz Aurich (DE); Schlittenbauer, Tobias, 71679 Asperg (DE)

(57) **Zusammenfassung**

Die Erfindung bezieht sich auf einen elektrischen Antrieb mit einer elektrischen Maschine (10) und einem Getriebe (22). Diese sind in einem gemeinsamen Systemgehäuse (18) untergebracht. Der elektrischen Maschine (10) sind ein Kühlsystem (32) und mindestens ein Ventil (40, 44) zugeordnet. Es ist mindestens ein Kühlkanal (46) vorgesehen, der sich am das Getriebe (22) aufnehmenden Teil des Systemgehäuses (18) erstreckt und der mit dem Kühlsystem (32) verbindbar oder von diesem abkoppelbar ist. Des Weiteren bezieht sich die Erfindung auf die Verwendung des elektrischen Antriebs im E-Achsen-Modul eines elektrisch angetriebenen Fahrzeugs.

## Beschreibung

### Technisches Gebiet

Die Erfindung bezieht sich auf einen elektrischen Antrieb mit einer elektrischen Maschine und einem Getriebe, die in einem gemeinsamen Systemgehäuse untergebracht sind und wobei der elektrischen Maschine ein Kühlsystem zugeordnet ist. Des Weiteren bezieht sich die Erfindung auf die Verwendung des elektrischen Antriebs in einem elektrisch angetriebenen Fahrzeug, insbesondere einem Personenkraftwagen oder einem leichten Nutzfahrzeug.

### Stand der Technik

DE 10 2008 001 621 A1, bezieht sich auf eine elektrische Maschine mit einer integrierten Gehäusekühlung. Eine elektrische Maschine umfasst ein mindestens eine Gehäusewand aufweisendes Gehäuse sowie mindestens eine in dem Gehäuse angeordnete elektrische Baugruppe. Es ist eine Kühleinrichtung vorgesehen, die mindestens eine Kühlmittelsprüheinrichtung zum Besprühen der elektrischen Baugruppe mit Kühlmedium aufweist. Es ist vorgesehen, dass die Kühleinrichtung zur Gehäusekühlung mindestens einen in der Gehäusewand verlaufenden Gehäusekühlmittelkanal für das Kühlmittel aufweist.

DE 10 2008 001 607 A1 hat eine elektrische Maschine für ein Fahrzeug zum Gegenstand. Es wird offenbart, dass eine elektrische Maschine für ein Fahrzeug, insbesondere ein Kraftfahrzeug, einen Rotor mit einer Rotorwelle aufweist sowie eine ein Kühlmittel enthaltende Kühleinrichtung umfasst. Es ist vorgesehen, dass die Rotorwelle als eine eine Innenwand aufweisende, von Kühlmittel durchströmte Hohlwelle ausgeführt ist, die in ihrem Inneren mindestens ein mit der Innenwand der Hohlwelle verbundenes, durch seine mit der Hohlwelle erfolgende Rotation förderndes Kühlmittelförderelement aufweist.

DE 10 2011 076 525 A1 hat einen elektrischen Fahrantrieb für ein Fahrzeug zum Gegenstand. Der elektrische Fahrantrieb für ein Fahrzeug umfasst mindestens eine elektrische Maschine sowie ein mit der elektrischen Maschine gekoppeltes Getriebe. Diese sind in einem gemeinsamen Gehäuse angeordnet. Es ist ein gemeinsamer Kühl- und/oder Schmierkreislauf für die elektrische Maschine und das Getriebe vorgesehen. Ferner ist der Kühl- und/oder Schmierkreislauf zumindest mit einem Kühlkörper an der elektrischen Maschine versehen, außerdem mit zumindest einem Verteilungskörper zum Verteilen des Kühl- und/oder Schmiermediums im Gehäuse verbunden.

In modernen elektrischen Antrieben, insbesondere elektrischen Antriebseinrichtungen, stellt die Kühlung des diesen zugeordneten Getriebes eine Herausforderung dar. Die Getriebe werden zum Schallschutz in Isolationsmaterialien gepackt, wodurch eine konvektive Ableitung von Verlustwärme unterbunden wird. Um die Verlustwärme jedoch abzuführen, werden externe oder integrierte Ölkühler eingesetzt, die mit einem erheblichen Zusatzaufwand und insbesondere erheblichen Zusatzkosten verbunden sind.

### Darstellung der Erfindung

Erfindungsgemäß wird ein elektrischer Antrieb mit einer elektrischen Maschine und einem Getriebe vorgeschlagen, wobei diese in einem gemeinsamen Systemgehäuse untergebracht sind und der elektrischen Maschine ein Kühlsystem zugeordnet ist. Das Kühlsystem umfasst mindestens einen Kühlkanal und mindestens ein Ventil, wobei sich der Kühlkanal am das Getriebe aufnehmenden Teil des Systemgehäuses erstreckt und mit dem Kühlsystem verbindbar oder von diesem abkoppelbar ist.

Durch die erfindungsgemäß vorgeschlagene Lösung wird eine einfache, kostengünstige Möglichkeit dargestellt, ein bereits vorhandenes, einer elektrischen Maschine zugeordnetes Kühlsystem zusätzlich zur Kühlung von Gehäusebereichen des mit der elektrischen Maschine in einem gemeinsamen Systemgehäuse untergebrachten Getriebes zu nutzen.

In vorteilhafter Ausgestaltung des erfindungsgemäß vorgeschlagenen elektrischen Antriebs umfasst das Kühlsystem eine Statorkühlung, die einen Stator der elektrischen Maschine kühlt. Dadurch kann unter Ausbildung einer Statormantelkühlung ein relativ großflächiger Bereich geschaffen werden, über den Abwärme der elektrischen Maschine effektiv abgeführt werden kann.

In weiterer vorteilhafter Ausgestaltung des erfindungsgemäß vorgeschlagenen elektrischen Antriebs ist der mindestens eine Kühlkanal über eine Übergangsleitung mit der Statorkühlung fluidisch verbunden.

Beim erfindungsgemäß vorgeschlagenen elektrischen Antrieb verläuft der mindestens eine Kühlkanal durch ein Gehäusewandteil des Systemgehäuses, der die elektrische Maschine und das Getriebe trennt und/oder durch den Teil des Gehäuses, der das Getriebe umschließt.

Dadurch lässt sich in vorteilhafter Weise erreichen, dass im Getriebe entstehende Wärme abgeführt werden kann, auch wenn der das Getriebe aufnehmende Teil des Systemgehäuses mit einem Schalldämmungsmaterial versehen ist beziehungsweise in dieses eingepackt ist.

In weiterer vorteilhafter Ausgestaltung des erfindungsgemäß vorgeschlagenen elektrischen Antriebs umfasst die Übergangsleitung oder der mindestens eine Kühlkanal das Ventil, welches eine fluidische Verbindung zu einer ersten Ableitstelle des Kühlmediums freigibt oder verschließt. Das hier angeordnete Ventil fungiert als Bypass-Ventil und leitet etwa bei nicht benötigter Kühlung des Getriebes, beispielsweise kurz nach Beginn der Fahrt, das nicht benötigte Kühlmedium direkt zurück in das Kühlsystem. Für den Fall, dass das Getriebe zu kühlen ist, wird die erste Ableitstelle geschlossen.

In weiterer vorteilhafter Ausgestaltung des erfindungsgemäß vorgeschlagenen elektrischen Antriebs umfasst die Übergangsleitung oder der mindestens eine Kühlkanal ein weiteres Ventil, welches eine fluidische Verbindung zu einer zweiten Ableitstelle des Kühlmediums öffnet oder verschließt. Durch das Vorsehen des weiteren Ventils kann bei geschlossenem Ventil zur ersten Ableitstelle der Strom des Kühlmediums zum Beispiel in die Gehäusewandung des Getriebeteils des gemeinsamen Gehäuses freigegeben werden, sodass die Zufuhr von Abwärme gewährleistet ist.

In weiterer vorteilhafter Ausgestaltung des erfindungsgemäß vorgeschlagenen elektrischen Antriebs können die Ventile als elektrisch regelbare Schaltventile oder als temperaturgesteuerte Ventile oder auch als druckgesteuerte Ventile ausgeführt werden. Dadurch ergeben sich je nach Erfordernis verschiedene Möglichkeiten der Steuerung des Kühlmediums beziehungsweise des An- oder Abschaltens des Abwärmetransports durch die Strömung des Kühlmediums.

In einer möglichen Ausgestaltungsvariante des elektrischen Antriebs kann der mindestens eine Kühlkanal als mindestens eine verschlossene Bohrung im Material des Systemgehäuses ausgeführt sein. Daneben besteht selbstverständlich auch die Möglichkeit, den mindestens einen Kühlkanal so zu gestalten, dass dieser einen durchgängigen Verlauf durch das Material des Systemgehäuses nimmt. Alternativ besteht die Möglichkeit, ein Rohr in das Gehäuse einzugießen oder im Systemgehäuse eine Nut auszubilden, die durch einen abgedichteten Deckel verschlossen wird.

In weiterer vorteilhafter Ausgestaltung des erfindungsgemäß vorgeschlagenen elektrischen Antriebs verläuft der mindestens eine Kühlkanal in fertigungstechnisch bedingt geringstem Abstand entlang von Lagerstellen des Getriebes. Dadurch können die Lagerstellen im Getriebe, d. h. die dort eingesetzten Wälzlager wirksam temperiert werden und auf einer konstanten Betriebstemperatur gehalten werden.

Beim erfindungsgemäß vorgeschlagenen elektrischen Antrieb ist insbesondere beim Einsatz von temperaturgesteuerten Ventilen das Getriebe auf passivem Wege gekühlt.

Der erfindungsgemäß vorgeschlagene elektrische Antrieb kann so ausgestaltet sein, dass eine Strömungsführung einer Statorkühlung derart beschaffen ist, dass das Kühlmedium den Stator der elektrischen Maschine spiralförmig oder auch mäanderförmig oder ungeführt umströmt.

Darüber hinaus bezieht sich die Erfindung auf die Verwendung des elektrischen Antriebs in einem elektrisch angetriebenen Fahrzeug, insbesondere einem Personenkraftwagen oder einem leichten Nutzfahrzeug.

### Vorteile der Erfindung

Durch die erfindungsgemäß vorgeschlagene Lösung wird auf besonders einfache Weise eine kostengünstige Möglichkeit bereitgestellt, ein bereits vorhandenes, der elektrischen Maschine zugeordnetes Kühlsystem zusätzlich zur Kühlung von Gehäusebereichen des Getriebes zu nutzen. Dazu können im Leitungssystem des Kühlsystems ein oder mehrere Ventile integriert sein, die als thermisch gesteuerte Ventile, als druckgesteuerte Ventile oder als elektrisch regelbare Schaltventile ausgeführt sein können. Durch das Vorsehen der Ventile beziehungsweise die Erweiterung des Kühlkanalsystems in den Teil des Systemgehäuses, in dem das Getriebe untergebracht ist, kann eine gezielte Regelung der Temperatur in einem elektrischen Antrieb mit zugeordnetem Getriebe realisiert werden. Durch die erfindungsgemäß vorgeschlagene Lösung des elektrischen Antriebs kann ein Kühlkörper oder die Ausbildung komplexer Geometrien zur Führung des Kühlmediums im Getriebe vermieden werden. Des Weiteren können durch den Entfall externer Anbauteile, beispielsweise extern angeordnete Wärmetauscher, oder durch den Entfall gehäuseintegrierter Kühlstrukturen Bauraum und Kosten hinsichtlich der Fertigung des gemeinsamen Systemgehäuses eingespart werden. Des Weiteren kann durch die erfindungsgemäß vorgeschlagene Lösung des elektrischen Antriebs dieser kompakter bauend ausgeführt werden, sodass dessen Einbauvarianz gesteigert wird.

Durch den Einsatz von regelbaren Ventilen kann beispielsweise eine Abschaltung der Kühlung durch Betätigung eines als Bypass-Ventil eingesetzten Ventils erreicht werden, sodass das Aufheizen eines noch kalten Getriebes beschleunigt wird, wodurch dieses schneller einen effizienteren Betriebsbereich erreicht.

Durch entsprechende Ausgestaltung der Ventile, seien sie als temperaturgesteuerte Ventile, als druckgesteuerte Ventile oder als elektrisch regelbare Schaltventile ausgeführt, kann auf einfachem und kostengünstigem Wege das Kühlsystem an verschiedene Anwendungen, beispielsweise Leistungsklassen, Antriebsarten, an den Einsatz des elektrischen Antriebs als Haupt- oder als Zweitantrieb angepasst werden. Bei konventionellen Kühlkonzepten müsste demgegenüber ab Erreichen einer spezifischen Leistungsklasse ein neues Schmierkonzept im Getriebe umgesetzt werden, was möglicherweise gar den Einsatz einer Ölpumpe und des Wärmetauschers erforderlich machen würde. Diese zusätzlichen Maßnahmen können durch den Einsatz des erfindungsgemäß vorgeschlagenen schaltbaren Kühlsystems umgangen werden.

### Kurze Beschreibung der Zeichnungen

Anhand der Zeichnungen wird die Erfindung nachstehend eingehender beschrieben.

Es zeigen:
- Figur 1: einen Schnitt durch einen erfindungsgemäß vorgeschlagenen elektrischen Antrieb mit einem gemeinsamen Systemgehäuse, in dem die elektrische Maschine sowie das Getriebe untergebracht sind und
- Figur 2: einen Schnitt durch das Systemgehäuse der elektrischen Maschine gemäß dem Schnittverlauf II-II von Figur 1.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

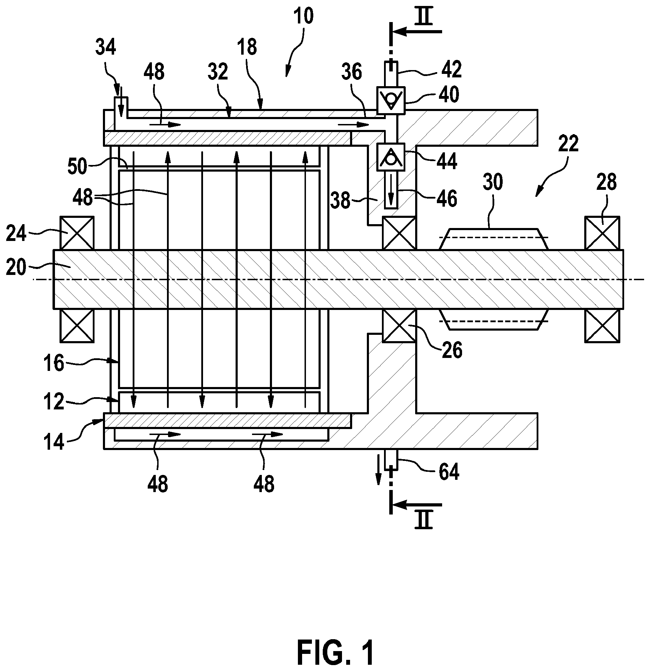

Figur 1 zeigt die erfindungsgemäß vorgeschlagene elektrische Antriebseinrichtung, eine elektrische Maschine 10 sowie ein Getriebe 22 umfassend. Diese sind in einem gemeinsamen Systemgehäuse 18 untergebracht. Wie aus Figur 1 hervorgeht, umfasst die elektrische Maschine 10 einen im Systemgehäuse 18 gelagerten Stator 12. Dazu umfasst das Systemgehäuse 18 ein Statorgehäuse 14. Die elektrische Maschine 10 umfasst des Weiteren einen relativ zum Stator 12 bewegbaren Rotor 16, der vom Stator 12 durch einen Luftspalt 50 getrennt ist.

Im Systemgehäuse 18, in dem die elektrische Maschine 10 und das Getriebe 22 untergebracht sind, ist eine Rotorwelle 20 in einem ersten Lager 24, einem zweiten Lager 26 sowie einem dritten Lager 28 drehbar gelagert. Die Rotorwelle 20, auf welcher sich der aufgeschrumpfte oder kraftschlüssig befestigte Rotor 16 befindet, ist durch die elektrische Maschine 10 angetrieben. Auf einem Abschnitt der Rotorwelle 20, die in dem Teil des Systemgehäuses 18 verläuft, in dem das Getriebe 22 untergebracht ist, befindet sich eine in Figur 1 angedeutete Verzahnung 30, von der lediglich der Teilkreisdurchmesser angedeutet ist.

Das Systemgehäuse 18, in dem die elektrische Maschine 10 und das Getriebe 22 untergebracht sind, umfasst ein Kühlsystem 32. Über einen Zulauf strömt entsprechend einer Strömungsführung 48 des Kühlmediums dieses einer Statorkühlung 34 zu. Die Statorkühlung 34 befindet sich innerhalb des Statorgehäuses 14 an der Schnittstelle zum Systemgehäuse 18. Innerhalb der Statorkühlung 34, die sich um den Mantel des Systemgehäuses 18 erstreckt, in dem der Stator 12 der elektrischen Maschine 10 aufgenommen ist, umströmt das Kühlmedium den ortsfest im Statorgehäuse 14 angeordneten Stator 12 entweder spiralförmig oder in Form einer mäanderartigen Strömung. Es besteht auch die Möglichkeit, die Strömungsführung 48 so auszubilden, dass innerhalb der Statorkühlung 34 eine ungelenkte Kühlmittelströmung entsteht, die die Abwärme der elektrischen Maschine 10 aufnimmt.

Die Statorkühlung 34 des Kühlsystems 32 ist über eine Übergangsleitung 36 mit mindestens einem Kühlkanal 46 verbunden. Dieser verläuft gemäß Figur 1 in einem Gehäusewandteil 38. Aus Gründen der Übersichtlichkeit ist ein Verlauf des mindestens einen Kühlkanals 46 in dem Teil des Systemgehäuses 18, der das Getriebe 22 aufnimmt, nicht dargestellt. Aus Figur 1 geht hervor, dass die Übergangsleitung 36, die das Kühlmedium führt, innerhalb des Gehäusewandteils 38 in den mindestens einen Kühlkanal 46 mündet. Im Ausführungsbeispiel gemäß Figur 1 befindet sich in dem Kühlkanal 46 ein Ventil 40, welches als Bypass-Ventil dient. Steht dieses offen, strömt das Kühlmedium der Statorkühlung 34, ohne den Teil des gemeinsamen Systemgehäuses 18 passiert zu haben, in dem sich das Getriebe 22 befindet, direkt einer ersten Ableitstelle 42 zu. Dies kann für den Fall gewünscht sein, dass das Getriebe 18 nicht zu kühlen ist, da es beispielsweise noch nicht seine normale Betriebstemperatur erreicht hat. Unterbleibt die Durchströmung des Gehäuseteils des Systemgehäuses 18, in dem das Getriebe 22 aufgenommen ist, so erreicht dieses schneller seinen effizienteren Betriebsbereich.

Des Weiteren ist an der Übergangsleitung 36 beziehungsweise an deren Mündung an dem mindestens einen Kühlkanal 46 ein weiteres Ventil 44 angeordnet. Steht dieses offen, so strömt das Kühlmedium aus der Statorkühlung 34 durch den mindestens einen Kühlkanal 46, der hier beispielsweise innerhalb des Gehäusewandteils 38 des Systemgehäuses 18 verläuft. Der mindestens eine Kühlkanal 46 gemäß Figur 1 mündet an einer zweiten Ableitstelle 64, ist demnach als durchgängiger Kanal innerhalb des Kühlsystems 32 ausgebildet. Alternativ besteht auch die Möglichkeit, den mindestens einen Kühlkanal 46 derart auszubilden, dass dieser aus einer Vielzahl von geschlossenen Bohrungen, d. h. Sackbohrungen, gebaut ist, die im Material des Teils des Systemgehäuses 18 vorgesehen sind, welcher das Getriebe 22 beziehungsweise dessen Komponenten umschließt.

Die beiden in Figur 1 dargestellten Ventile 40, 44 können sowohl als elektrisch regelbare Schaltventile ausgebildet sein als auch als temperaturgesteuerte oder druckgesteuerte Ventile ausgelegt sein. Werden die beiden Ventile 40, 44 als temperaturgesteuerte Ventile ausgeführt, so kann ein passiver Betrieb des Kühlsystems 32 realisiert werden, der keine aktiv geschalteten Ventile umfasst; diese geben die Zirkulation des Kühlmediums erst bei Erreichen eines bestimmten Temperaturschwellwerts frei oder sperren diese ab.

Der in Figur 1 dargestellte mindestens eine Kühlkanal 46 erstreckt sich ausgehend von der Übergangsleitung 36 sowohl zur ersten Ableitstelle 42 des Kühlmediums als auch durchgängig zur zweiten Ableitstelle 64 des Kühlmediums durch den Gehäusewandteil 38 des Systemgehäuses 18. Daneben besteht durchaus auch die Möglichkeit, das Material des gemeinsamen Systemgehäuses 18 mit einer Anzahl von Kühlkanälen 46 zu versehen, die sich beispielsweise im Mantel des Systemgehäuses 18 befinden, der die Komponenten des Getriebes 22 beziehungsweise das Getriebe 22 umgibt. Dadurch kann auch ein in Schallschutz oder Isolationsmaterial eingepacktes Systemgehäuse 18 - was die Getriebeseite betrifft - wirksam gekühlt werden.

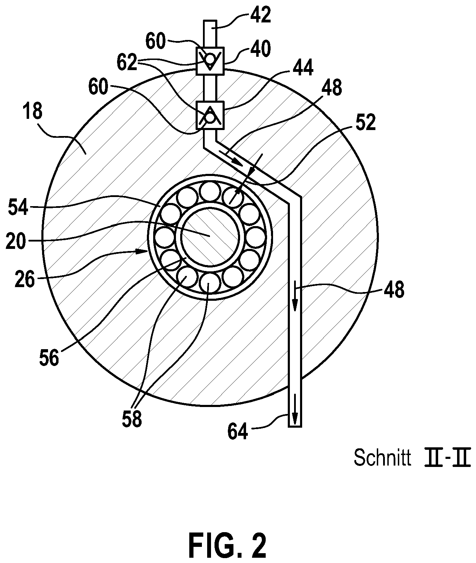

Die Darstellung gemäß Figur 2 gibt einen Schnittverlauf II-II wieder, wie dieser in der Figur 1 angedeutet ist.

Aus der Darstellung gemäß Figur 2 geht hervor, dass sich der mindestens eine Kühlkanal 46 ausgehend von der ersten Ableitstelle 42 zur gegenüberliegenden zweiten Ableitstelle 64 durch das Gehäusewandteil 38 des Systemgehäuses 18 erstreckt. In diesem befindet sich das zweite Lager 26, das als Wälzlager ausgeführt ist und einen Außenring 54, einen Innenring 56 und zwischen diesen aufgenommene Wälzkörper 58 umfasst. Bei den Wälzkörpern 58 kann es sich um Zylinderrollen oder um Kugeln oder dergleichen handeln. Der Verlauf des mindestens einen Kühlkanals 46 durch das Gehäusewandteil 38 des Systemgehäuses 18 ist so gewählt, dass der mindestens eine Kühlkanal 46 in unmittelbarer Nähe des zweiten Lagers 26 verläuft. Ein Abstand 52 zwischen dem zweiten Lager 26 und dem mindestens einen Kühlkanal 46 ergibt sich als fertigungsbedingter Mindestabstand. Durch das entsprechend der Strömungsführung 48 den mindestens einen Kühlkanal 46 durchströmende Kühlmedium kann Abwärme des zweiten Lagers 26 wirkungsvoll abgeführt werden, sodass das zweite Lager 26, angeordnet in der Nähe des mindestens einen Kühlkanals 46, während des Betriebs auf einer definierten, vorgegebenen Temperatur gehalten werden kann.

Aus der Darstellung gemäß Figur 2 geht die Mündung der Übergangsleitung 36 gemäß Figur 1 in den mindestens einen Kühlkanal 46 aus zeichnerischen Gründen nicht hervor. Die Positionen des Ventils 40, das als Bypass-Ventil dient, sowie des weiteren Ventils 44 entsprechen den Positionen dieser Ventile in der Darstellung gemäß Figur 1. Über das Ventil 40, das als Bypass-Ventil dient, kann Kühlmedium unmittelbar an die erste Ableitstelle 42 geleitet werden. In diesem Fall ist das weitere Ventil 44 geschlossen. Ist das Ventil 40, das als Bypass-Ventil dient, geschlossen und das weitere Ventil 44 steht offen, so strömt aus der in Figur 1 dargestellten Statorkühlung 34 über die Übergangsleitung 36 Kühlmedium entsprechend der Strömungsführung 48 in den mindestens einen Kühlkanal 46 und passiert das zweite Lager 26, das im Gehäusewandteil 38 angeordnet ist.

Die Ventile 40, 44 sind so beschaffen, dass diese entweder als regelbare elektrische Schaltventile ausgeführt sein können oder druckgesteuert oder temperaturgesteuert betrieben werden. Ein jedes der Ventile 40, 44 umfasst gemäß der Darstellung in Figur 2 einen Ventilkörper 60, der hier kugelförmig angedeutet ist. Der Ventilkörper 60 der Ventile 40, 44 wirkt mit einem Ventilsitz 62 zusammen.

Das anhand der Figuren 1 und 2 beschriebene Kühlsystem 32 ist so ausgeführt, dass auch eine der Strömungsführung 48 des Kühlmediums vorgeschaltete, in den Figuren 1 und 2 nicht dargestellte Leistungselektronik vom Kühlmedium passiert wird, bevor dieses in die Statorkühlung 34, die Teil des Kühlsystems 32 ist, eintritt. Nach Passage der Leistungselektronik erfolgt, wie in Figur 1 dargestellt, die Durchströmung der Statorkühlung 34, die über die Übergangsleitung 36 mit dem mindestens einen Kühlkanal 46 verbunden ist. Der Hohlraum der Statorkühlung 34, der vom Kühlmedium passiert wird, ist an der Schnittstelle zwischen dem Statorgehäuse 14 und dem gemeinsamen Systemgehäuse 18 ausgeführt. Durch den erfindungsgemäß vorgeschlagenen elektrischen Antrieb kann über gezielte Steuerung der Ventile 40, 44 ein variables Kühlkonzept dargestellt werden. Wie bereits erwähnt, kann durch den Einsatz temperaturgesteuerter Ventile als Ventile 40, 44 ein passives System umgesetzt werden, welches rein aufgrund der vorherrschenden Betriebstemperaturen die Ventile 40, 44 schaltet. Dies kann beispielsweise mit temperaturempfindlichen Bimetallelementen oder dergleichen erfolgen, die das Schalten der hier passiv betriebenen Ventile 40, 44 bewirken.

Der erfindungsgemäß vorgeschlagene elektrische Antrieb kann insbesondere an elektrisch angetriebenen Fahrzeugen Verwendung finden. Dafür kommen insbesondere elektrisch angetriebene Personenkraftwagen oder auch elektrisch angetriebene leichte Nutzfahrzeuge in Betracht.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Elektrischer Antrieb mit einer elektrischen Maschine (10) und einem Getriebe (22), die in einem gemeinsamen Systemgehäuse (18) untergebracht sind und der elektrischen Maschine (10) ein Kühlsystem (32) zugeordnet ist, **dadurch gekennzeichnet, dass** das Kühlsystem (32) mindestens ein Ventil (40, 44) und mindestens einen Kühlkanal (46) umfasst, der sich am das Getriebe (22) aufnehmenden Teil des Systemgehäuses (18) erstreckt und der mit dem Kühlsystem (32) verbindbar oder von diesem abkoppelbar ist.

2. Elektrischer Antrieb gemäß Anspruch 1, **dadurch gekennzeichnet, dass** das Kühlsystem (32) eine Statorkühlung (34) umfasst, die einen Stator (12) der elektrischen Maschine (10) kühlt.

3. Elektrischer Antrieb gemäß den Ansprüchen 1 bis 2, **dadurch gekennzeichnet, dass** der mindestens eine Kühlkanal (46) über eine Übergangsleitung (36) mit der Statorkühlung (34) fluidisch verbunden ist.

4. Elektrischer Antrieb gemäß den Ansprüchen 1 bis 3, **dadurch gekennzeichnet, dass** der mindestens eine Kühlkanal (46) durch einen Gehäusewandteil (38) des Systemgehäuses (18) verläuft, der die elektrische Maschine (10) und das Getriebe (22) trennt und/oder durch den Teil des Systemgehäuses (18) verläuft, der das Getriebe (22) umschließt.

5. Elektrischer Antrieb gemäß den Ansprüchen 1 bis 4, **dadurch gekennzeichnet, dass** die Übergangsleitung (36) oder der mindestens eine Kühlkanal (46) ein Ventil (40) umfasst, welches eine fluidische Verbindung zu einer ersten Ableitstelle (42) des Kühlmediums freigibt oder verschließt.

6. Elektrischer Antrieb gemäß den Ansprüchen 1 bis 5, **dadurch gekennzeichnet, dass** die Übergangsleitung (36) oder der mindestens eine Kühlkanal (46) ein weiteres Ventil (44) umfasst, welches eine fluidische Verbindung zu einer zweiten Ableitstelle (64) des Kühlmediums öffnet oder verschließt.

7. Elektrischer Antrieb gemäß den Ansprüchen 1 bis 6, **dadurch gekennzeichnet, dass** die Ventile (40, 44) als elektrisch regelbare Schaltventile oder als temperaturgesteuerte Ventile oder als druckgesteuerte Ventile ausgeführt sind.

8. Elektrischer Antrieb gemäß den Ansprüchen 1 bis 7, **dadurch gekennzeichnet, dass** der mindestens eine Kühlkanal (46) als mindestens eine verschlossene Bohrung im Material des Systemgehäuses (18) ausgeführt ist.

9. Elektrischer Antrieb gemäß den Ansprüchen 1 bis 8, **dadurch gekennzeichnet, dass** der mindestens eine Kühlkanal (46) in fertigungstechnisch bedingt geringstem Abstand (52) entlang von Lagerungsstellen (26, 28) des Getriebes (18) verläuft.

10. Elektrischer Antrieb gemäß den Ansprüchen 1 bis 9, **dadurch gekennzeichnet, dass** bei als temperaturgesteuerten Ventilen ausgeführten Ventilen (40, 44) das Getriebe (22) passiv gekühlt ist.

11. Elektrischer Antrieb gemäß den Ansprüchen 1 bis 2, **dadurch gekennzeichnet, dass** eine Strömungsführung (48) des Kühlmediums in der Statorkühlung (34) so ausgeführt ist, dass das Kühlmedium den Stator (12) der elektrischen Maschine (10) spiralförmig, mäanderförmig oder ungeführt umströmt.

12. Verwendung des elektrischen Antriebs gemäß einem der Ansprüche 1 bis 11 in einem elektrisch angetriebenen Fahrzeug, insbesondere einem Personenkraftwagen oder einem leichten Nutzfahrzeug.
